# EUROPÄISCHE PATENTSCHRIFT

(11) **EP 4 126 670 B1**
(45) Veröffentlichungstag und Bekanntmachung des Hinweises auf die Patenterteilung: **26.07.2023**
(21) Anmeldenummer: 21721469.1
(22) Anmeldetag: 22.04.2021
(51) Int. Cl.: B64D 11/02, E05F 15/00, G07C 9/00

(54) **ANSTEUERUNG EINER WASCHRAUMTÜR DURCH NUTZER UND AUTORISIERTE STELLEN**
CONTROL OF A LAVATORY DOOR BY A USER AND AUTHORISED ENTITIES
CONTRÔLE D'UNE PORTE DE TOILETTES PAR LES UTILISATEURS ET LES ORGANISMES AUTORISÉS

(30) Priorität: 24.04.2020 DE 102020205215
(43) Veröffentlichungstag der Anmeldung: 08.02.2023
(73) Patentinhaber: Diehl Aviation Laupheim GmbH, 88471 Laupheim (DE); Diehl Aviation Gilching GmbH, 82205 Gilching (DE)
(72) Erfinder: MÜLLER, Björn, 22391 Hamburg (DE); ZAGER-RODE, Florian, 21614 Buxtehude (DE); ENGELHARDT, Jörg, 22605 Hamburg (DE)
(74) Vertreter: Diehl Patentabteilung
(86) Internationale Anmeldenummer: PCT/EP2021/060467
(87) Internationale Veröffentlichungsnummer: WO 2021/214191

(56) Entgegenhaltungen:
- DE-A1-102014 105 565
- DE-A1-102015 226 354
- DE-A1-102018 113 132
- DE-A1-102018 117 978

## Beschreibung

Die Erfindung betrifft einen Waschraum eines Flugzeugs mit einer Türe.

Aus der Praxis ist es bekannt, Türen für Waschräume ("Lavatory", Bordtoilette) in Flugzeugen per Hand zu öffnen, zu schließen und zu verriegeln.

Aus der DE 10 2018 113 132 A1 ist eine Vorrichtung zum Betätigen einer Tür für Toilettenkabinen an Bord von Fahrzeugen bekannt, die für eine Toilettenkabine an Bord von Fahrzeugen ausgeführt ist. Die Vorrichtung ist mit einer Bedieneinheit zum Erzeugen eines Steuersignals in Abhängigkeit einer Bedientätigkeit eines Insassen des Fahrzeugs sowie mit einer Stellvorrichtung zum elektromotorischen Betätigen einer Toilettentür in einem Fahrzeug in Abhängigkeit des Steuersignals ausgebildet. Zudem weist die Bedieneinheit zumindest eine Sensoranordnung zum Erfassen einer Geste des Insassen auf, so dass das Steuersignal auf der Basis einer erfassten Geste erzeugbar ist. Hierdurch ist beispielsweise durch eine Handbewegung eine berührungsfreie Bedienung der Vorrichtung möglich, ein Berühren von Oberflächen oder Betätigungselementen wird vermieden sodass ein äußerst hygienischer Umgang mit Türen von Bordtoiletten ermöglicht ist.

Es ist Aufgabe der vorliegenden Erfindung, Verbesserungen im Zusammenhang mit einer Türe eines Waschraumes eines Flugzeuges vorzuschlagen.

Die Aufgabe wird durch eine Steuerungs- und Informationsanlage gemäß Anspruch 1 gelöst. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Gegenstand der Erfindung ist eine Steuerungs- und Informationsanlage, welche bestimmungsgemäß für einen Waschraum eines Flugzeugs eingerichtet bzw. vorgesehen ist. Dabei wird davon ausgegangen, dass der Waschraum eine Türe in Form einer Zugangstüre aufweist, durch die der Waschraum von Personen betreten werden kann. Beispielsweise ist die Türe als eine Falttüre ausgebildet. Optional umfasst die Türe mehrere Türblätter, die durch mindestens ein Scharnier schwenkbar miteinander verbunden sind. Vorzugsweise ist der Waschraum in einer Kabine des Flugzeugs integrierbar. Der Begriff "Waschraum" ist dabei weit zu verstehen, bei dem Waschraum kann es sich daher um eine sogenannte "Lavatory", einen Toiletten- und/oder Duschraum, eine Umkleidekabine, einen durch eine Tür verschließbaren Ruhebereich o.ä. handeln, der zumindest zeitweise für Nutzer, insbesondere Passagiere des Flugzeuges regulär nutzbar sein soll. "Regulär" bedeutet, dass jeder Nutzer berechtigt ist, den Raum durch Öffnen der entriegelten Tür zu betreten oder zu verlassen und die Tür von innen zu verriegeln oder zu entriegeln.

Die Steuerungs- und Informationsanlage umfasst mindestens einen Türaktuator, der zum Öffnen und Schließen der Türe ausgebildet ist. Beispielsweise umfasst der Türaktuator eine Antriebseinheit bestehend aus einem Elektromotor und einem Getriebe, welche zur Erzeugung und Übertragung eines Drehmoments auf Scharniere der Türe, insbesondere der Falttüre, ausgebildet ist.

Die Steuerungs- und Informationsanlage umfasst auch mindestens einen Schlossaktuator, der zum Verriegeln und Entriegeln der Tür ausgebildet ist.

Beispielsweise umfasst der Schlossaktuator einen Elektromotor und ein Verriegelungselement, beispielsweise einen Verriegelungsbolzen. Insbesondere ist der Elektromotor dazu ausgebildet, das Verriegelungselement in eine Verriegelungsposition zu überführen, um die Türe zu verriegeln.

Die Steuerungs- und Informationsanlage weist eine Steuerungseinrichtung auf. Die Steuerungseinrichtung ist dazu eingerichtet, die Türaktuatoren und die Schlossaktuatoren anzusteuern. Die Steuerungseinrichtung umfasst vorzugsweise ein Gehäuse, in dem ein Controller, Motortreiber zum Antrieb von Elektromotoren des Türaktuators und des Schlossaktuators, ein Speicher, eine Stromanbindung an eine Stromversorgung des Flugzeugs, diskrete Ein- und Ausgänge und/oder Datenbusschnittstellen der Steuerungseinrichtung aufgenommen sind.

Die Steuerungs- und Informationsanlage weist auch eine Mensch-Maschine-Schnittstelle auf, die insbesondere eine Sensoreinrichtung enthält. Die Mensch-Maschine-Schnittstelle, insbesondere die Sensoreinrichtung, ist dazu ausgebildet, eine die Tür, insbesondere den Türaktuator und/oder den Schlossaktuator betreffende Auslöseaktion eines Nutzers der Türe, z.B. eines Passagiers des Flugzeugs, der die Türe öffnen / schließen / verriegeln / entriegeln möchte, zu erfassen und die Auslöseaktion als ein Auslösesignal an die Steuerungseinrichtung zu übermitteln. Die Steuerungseinrichtung setzt dann das betreffende Auslösesignal in die betreffende gewünschte Aktion (Öffnen, Schließen, Verriegeln, Entriegeln) der Türe um.

Die Auslöseaktion und das zugehörige Auslösesignal wirkt dabei auf den Türaktuator und/oder den Schlossaktuator, je nach der anhand der Auslöseaktion vom Nutzer gewünschten Aktion. Verschiedene Auslösesignale werden also durch verschiedene Auslöseaktionen in Form von Interaktionen des Nutzers mit der Mensch-Maschine-Schnittstelle erzeugt, z.B. das Bedienen verschiedener Schaltflächen, wie "Tür auf", "Tür entriegeln" usw. Dabei handelt es sich ausschließlich um die reguläre Bedienung der Tür. "Regulär" bedeutet insbesondere, eine Ver- oder Entriegelung der Tür oder deren Öffnen oder Schließen, wie weiter unten noch erläutert wird, kurz als "Bedienung der Türe" bezeichnet. "Regulär" ist dabei so zu verstehen, dass die betreffende Person in Form des Nutzers keine besondere Autorisierung benötigt, um die Türe in dieser Form zu bedienen. Die reguläre Bedienung ohne Autorisierung erlaubt insbesondere das Öffnen einer unverschlossenen Türe von außerhalb des Waschraums, das Schließen der Türe von außerhalb des Waschraums, das Öffnen und Schließen der Türe von innerhalb des Waschraums und das Ver- und Entriegeln der Türe von innerhalb des Waschraums.

Nutzer ist dabei jede Person, die keine besondere Autorisierung in Bezug auf die Türe und damit zusammenhängende Komponten (Display, Mensch-Maschine-Schnittstelle) aufweist, insbesondere alle Fluggäste. Nutzer können jedoch auch andere Personen sein, die sich im Flugzeug aufhalten wie z.B. Bodenpersonal, Flugpersonal, Crew usw. Sofern diese keine derartige besondere Autorisierung aufweisen, sind diese ebenso als nicht autorisierte "Nutzer" zu verstehen. Der Nutzer besitzt daher in Bezug auf die Türe "Standardrechte".

Neben dem nicht autorisierten Nutzer existieren noch sogenannte autorisierte Stellen. Diese sind Personen oder Einheiten, die eine besondere Autorisierung in Bezug auf die Tür aufweisen. Die autorisierten Stellen sind unter anderem Personen in Form des Flugpersonals des Flugzeugs wie z.B. die Flugbegleiter oder die Besatzung (Crew: Pilot, Kopilot, ...). Weiterhin sind dies Personen in Form von Servicepersonal wie z.B. Reinigungs- oder Wartungskräfte, die bestimmungsgemäß am Flugzeug anwesend sind, um dort Arbeiten auszuführen. Weiterhin kann die autorisierte Stelle auch ein datentechnisches Gerät bzw. System, insbesondere das Bordnetz des Flugzeuges bzw. dessen Komponenten sein, die zur Steuerung der Türe bestimmt sind. Unter "Bordnetz" sind hier insbesondere die datentechnischen Komponenten des Flugzeuges zu verstehen, wie z.B. dessen Bordcomputer, Flugrechner, ein Kabinenmanagementsystem usw.

All diese autorisierten Stellen, also autorisierte Personen oder Geräte etc., weisen im Gegensatz zum Nutzer eine spezielle Autorisierung in Bezug auf die Tür und damit zusammenhängende Komponenten wie z.B. die Mensch-Maschine-Schnittstelle auf. Die Autorisierung betrifft auch die Bedienung, Konfigurierung usw. all dieser Komponenten. Dies betrifft insbesondere die Möglichkeit, die Türe auch von außerhalb des Waschraums zu verriegeln oder zu entriegeln, die Mensch-Maschine-Schnittstelle bzw. deren Display zu konfigurieren usw. All diese Tätigkeiten sind dem normalen Nutzer nicht erlaubt, sind jedoch z.B. zu Servicezwecken, in Notfällen usw. erforderlich oder sinnvoll. Die autorisierten Stellen weisen damit "Sonderrechte" in Bezug auf die Tür auf.

Die autorisierten Personen können dabei unter Nutzung ihrer Autorisierung als autorisierte Stellen tätig werden. Sie können jedoch auch als "normale Nutzer" auftreten, wenn sie die z.B. die Mensch-Maschine-Schittstelle wie ein Nutzer nutzen, ohne dabei ihre Autorisierung einzusetzen.

Autorisierung ist insbesondere die Verwendung eines Passwortes, eines RFID-Chips, einer autorisierten Bluetooth- oder WLAN-Verbindung mit der Mensch-Maschine-Schnittstelle, mit einer Kommunikationsschnittstelle (siehe unten), usw.

Zusätzlich zu dem Nutzer kann die oben genannte Auslöseaktion also auch durch Personen erfolgen, die zu den autorisierten Stelle gehören. So kann z.B. Bordpersonal die Türe wie jeder andere Nutzer auch über die Mensch-Maschine-Schnittstelle bedienen, ist jedoch hierbei auf die nicht autorisierten Möglichkeiten beschränkt.

Vorzugsweise ist die Steuerungseinrichtung dazu ausgebildet, den Türaktuator und den Schlossaktuator bei und/oder nach der Übermittlung des Auslösesignals anzusteuern. Insbesondere kann die Steuerungseinrichtung den Türaktuator in Abhängigkeit einer Türposition und/oder den Schlossaktuator in Abhängigkeit einer Position des Verriegelungselements ansteuern. Im Speziellen werden der Türaktuator und/oder der Schlossaktuator positionsabhängig, d.h. abhängig von ihrer aktuellen Ist-Position bestromt, z.B. auch, um ein Drehmoment zu erzeugen, welches ein Bewegungsprofil implementiert.

Es ist vorgesehen, dass die Steuerungs- und Informationsanlage weiterhin auch mindestens eine Kommunikationsschnittstelle umfasst, die von der Mensch-Maschine-Schnittstelle verschieden ist, jedoch in diese integriert sein kann, siehe unten. Die Kommunikationsschnittstelle ist dazu eingerichtet, Eingabeinformationen der autorisierten Stelle an die Steuerungseinrichtung zu übermitteln. Optional ergänzend ist die Kommunikationsschnittstelle auch dazu ausgebildet, Ausgabeinformationen der Steuerungseinrichtung an die autorisierte Stelle zu übermitteln. Vorzugsweise ist die Kommunikationsschnittstelle dazu eingerichtet, einen Austausch der Eingabeinformationen und der Ausgabeinformationen zwischen der autorisierten Stelle und der Steuerungseinrichtung vorzunehmen. Der Austausch kann beispielsweise wechselseitig erfolgen. Insbesondere ist eine Kommunikation zwischen der Steuerungseinrichtung und der autorisierten Stelle möglich, bei der die Kommunikation den Waschraum und/oder das Flugzeug betrifft, in dem der Waschraum integriert ist.

Die autorisierte Stelle ist also eben nicht der unautorisierte Nutzer der Türe, also insbesondere nicht der Passagier des Flugzeugs, sondern eine im Kontext der Tür autorisierte Person. Es kann sich auch um eine derart autorisierte elektronische Einrichtung des Flugzeuges bzw. dessen Bordnetz handeln. Somit kann über die Kommunikationsschnittstelle auch eine automatisierte Bedienung der Türe über das Bordnetz erfolgen.

Vorteilhaft ist, dass mittels der Steuerungs- und Informationsanlage ein ggf. mit dem Flugzeug bzw. dessen Bordnetz vernetzter Waschraum mit auch automatisch betätigbarer Türe bereitgestellt werden kann, wobei die Betätigung durch Nutzer oder autorisierte Stellen in unterschiedlicher Weise bzw. mit unterschiedlichen Berechtigungen durchgeführt werden kann.

In einer bevorzugten Ausführungsform der Erfindung umfasst die Mensch-Maschine-Schnittstelle eine Anzeigeeinrichtung. Beispielsweise ist die Anzeigeeinrichtung als ein Monitor oder als ein Display, optional ergänzend mit einer entsprechenden Hardwareplattform, ausgebildet. Bevorzugt umfasst die Anzeigeeinrichtung einen Touchscreen zur berührungsempfindlichen Betätigung. Möglich ist es auch, dass die Anzeigeeinrichtung eine Lautsprechereinrichtung bzw. -funktion für Audioausgaben umfasst.

Die Anzeigeeinrichtung ist optional dazu ausgebildet, die Eingabeinformationen der autorisierten Stelle anzuzeigen. Optional und falls überhaupt Ausgabeinformationen vorhanden sind, ist die Anzeigeeinrichtung auch dazu ausgebildet, die Ausgabeinformationen der Steuerungseinrichtung anzuzeigen bzw. auszugeben. Optional ergänzend ist die Anzeigeeinrichtung dazu ausgebildet, die Auslöseaktion des Nutzers und/oder zu initiierende Auslöseaktionen des Nutzers anzuzeigen. Alternativ oder zusätzlich umfasst die Mensch-Maschine-Schnittstelle dabei auch wenigstens eine der Kommunikationsschnittstellen.

So kann teilweise oder auch alle Kommunikation über die betreffende Kommunikationschnittstelle auch am Ort der Mensch-Maschine-Schnittstelle erfolgen. So steht ein einziger Ort zur Verfügung, nämlich die Mensch-Maschine-Schnittstelle, welche es einheitlich dem Nutzer, aber auch Personen der autorisierten Stelle ermöglicht, von dort aus die Türe bzw. damit assoziierte Komponenten zu bedienen. Möglich ist es auch, dass die Kommunikationsschnittstelle gemeinsam mit der Anzeigeeinrichtung und einer Sensoreinrichtung (siehe unten) in einem Gehäuse der Mensch-Maschine-Schnittstelle aufgenommen ist. Bevorzugt ist, dass die Kommunikationsschnittstelle mit mindestens einem der autorisierten Stelle zugeordneten externen Gerät kommuniziert, um dort Meldungen / Daten auszugeben und/oder mit der Anzeigeeinrichtung kommunikativ verbunden ist, um dort Meldungen auszugeben. Das "externe Gerät" ist insbesondere ein von autorisierten Personen mitgeführter oder selbst autorisierter Laptop, Tablet, Smartphone, Spezialhardware, ein mit der Kommunikationsschnittstelle kommunizierender Speicher oder sonstiges Gerät, usw.

Beispielsweise kann sich also die Besatzung oder das Servicepersonal des Flugzeuges durch Passworteingabe an einem Touchscreen der Mensch-Maschine-Schnittstelle oder berührungslos durch near field communication (NFC) an der Mensch-Maschine-Schnittstelle anmelden. Auch kann z.B. über ein per WLAN / RFID mit der Kommunikationsschnittstelle verbundenes autorisiertes externes Gerät (Tablet, Laptop, ...) auf die Kommunikationsschnittstelle bzw. die Steuerungseinrichtung zugegriffen werden.

All dies gilt natürlich vergleichsweise auch für Kommunikationsschnittstellen, die nicht in der Mensch-Maschine-Schnittstelle integriert sind.

In einer weiteren bevorzugten Ausführungsform der Erfindung ist eine der autorisierten Stellen ein Bordnetz des Flugzeuges und mindestens eine der Kommunikationsschnittstellen ist zur Kommunikation mit dem Bordnetz eingerichtet. Diese Kommunikationsschnittstelle ist also dazu ausgebildet, die Ein- / Ausgabeinformationen zwischen dem Bordnetz und der Steuerungseinrichtung auszutauschen.

Insgesamt also kann die Besatzung oder das autorisierte Personal / Bordnetz mittels der Kommunikationsschnittstelle Ein- / Ausgabeinformationen mit der Steuerungseinrichtung austauschen. Vorzugsweise steuert die Steuerungseinrichtung die Anzeigeeinrichtung dazu an, die Ein- / Ausgabeinformationen anzuzeigen.

Bei den Eingabeinformationen kann es sich zum Beispiel um Kommandos der autorisierten Person oder des Bordcomputers handeln, die zu einer Deaktivierung der Steuerungseinrichtung, insbesondere zu einer Stromlosschaltung der Steuerungseinrichtung, führen und eine manuelle Entriegelung und Öffnung der Türe erlauben. Dies ist zum Beispiel bei einem Notfall von Vorteil, insbesondere wenn sich eine Person im Waschraum in Schwierigkeiten befindet und die Türe des Waschraums nicht mehr selbstständig entriegeln und öffnen kann. Möglich ist auch, dass die autorisierte Person oder der Bordcomputer Kommandos als Eingabeinformationen eingibt, um notwendige Instandhaltungs- und/oder Säuberungsmaßnahmen in dem Waschraum vorzunehmen. In diesem Fall kann die Türe für eine gewisse Zeit durch die Besatzung und/oder das Personal geschlossen und verriegelt werden, um die Maßnahmen in dem Waschraum durchzuführen und um zu verhindern, dass eine Person den Waschraum während dessen betritt.

Die Eingabeinformationen können auch Dateien oder Inhalte auf einem Speichermedium sein, die von einer Airline als autorisierter Stelle zur Steuereinrichtung übertragen werden und dann z.B. in einem Speicher der Mensch-Maschine-Schnittstelle hinterlegt werden. Insbesondere kann ein Inhalt der Dateien oder des Speichermediums z.B. individuelle Anzeigen enthalten, die von der Steuerungseinrichtung abgerufen und umgesetzt bzw. auf der Anzeigeeinrichtung angezeigt werden.

Der Mensch-Maschine-Schnittstelle kann also ein Speicher zugeordnet sein, der insbesondere mit der Steuereinrichtung verbunden und z.B. auch in dieser integriert ist.

Bei den Eingabeinformationen kann es sich auch um flugzeugseitige und/oder flugphasenabhängige Kommandos des Bordnetzes handeln.

In einer bevorzugten Ausführungsform sind daher die Eingabeinformationen solche, die bei bestimmten Flugphasen automatisch vom autorisierten Bordnetz an die Steuerungseinrichtung übermittelt werden. So kann z.B. die Türe bei den Flugphasen "Taxi", "Start", oder "Landung", bei auftretenden "Turbulenzen" oder Einschalten des Anschnallzeichens etc. auf Basis der flugzeugseitigen und/oder flugphasenabhängige Kommandos mittels der Steuerungseinrichtung automatisch verschlossen und verriegelt werden. Dadurch kann in vorteilhafter Weise eine Nutzung des Waschraums in bestimmten Flugphasen verhindert werden und somit die Sicherheit der Passagiere an Bord erhöht werden. Das Kabinenpersonal ist dabei von dieser Aufgabe entlastet.

In einer bevorzugten Ausführungsform der Erfindung ist die Kommunikationsschnittstelle auch dazu ausgebildet, die Ausgabeinformationen von der Steuerungseinrichtung an die autorisierte Stelle zu übermitteln. Insbesondere sind die Ausgabeinformationen dabei - z.B. auf der Anzeigeeinrichtung - als Zeichen, Text, Bilder und/oder Video anzeigbar. Optional ergänzend ist es möglich, dass die Ausgabeinformationen als Audioausgaben über eine optionale Lautsprecherfunktion - z.B. der Anzeigeeinrichtung - ausgegeben werden. Vorzugsweise steuert die Steuerungseinrichtung die Anzeige / Ausgabe der Ausgabeinformationen auf der Anzeigeeinrichtung an.

Beispielsweise umfassen die Ausgabeinformationen einen Türstatus, z.B. eine Angabe darüber, ob die Türe geöffnet oder geschlossen und/oder entriegelt oder verriegelt ist. Die Ausgabeinformationen können auch Informationen über Aktionen umfassen, die von einem Nutzer der Türe zu initiieren sind. Beispielsweise können die Ausgabeinformationen eine Warnung enthalten, dass die Türe geschlossen ist und noch verriegelt werden muss oder dass die Türe verriegelt ist und zum Öffnen zunächst entriegelt werden muss.

Bei den Ausgabeinformationen kann es sich auch um individuelle Anzeigen handeln, die in dem Speicher hinterlegt sind/wurden. Bei den individuellen Anzeigen kann es sich zum Beispiel um flugabhängige Schriftzüge, Videosequenzen, um Begrüßungs- oder Verabschiedungssätze, um Piktogramme und/oder Logos oder Ähnliches handeln. Beispielsweise können die individuellen Anzeigen zeitgesteuert durch die Steuerungseinrichtung zur Anzeige auf der Anzeigeeinrichtung angesteuert werden. Möglich ist es im Rahmen der Erfindung auch, dass die individuellen Anzeigen in bestimmten Flugphasen des Flugzeugs anzeigt werden.

In einer besonders bevorzugten Ausführungsform der Erfindung umfasst die Mensch-Maschine-Schnittstelle eine Sensoreinrichtung. Die Sensoreinrichtung umfasst dabei mindestens einen optischen Näherungssensor, z.B. time-of-flight-sensor, Infrarotsensoren und/oder einen kapazitiven Näherungssensor. Der Sensor dient dann der Erfassung als Auslöseaktion einer berührungslosen Annäherung des Nutzers und/oder Geste. Beispielsweise handelt es sich bei der berührungslosen Annäherung des Nutzers um eine spezifische Annäherung.

Vorzugsweise umfasst die spezifische Annäherung eine zeitabhängige Haltedauer in einem definierten Abstand vor der Sensoreinrichtung, z.B. muss die Hand eines Nutzers eine bestimmte Zeit lang vor die Sensoreinrichtung gehalten werden. Beispielsweise kann so eine ungewollte Auslösung der Sensoreinrichtung durch Vorbeigehen an dem Näherungssensor oder durch ein Stehenbleiben des Nutzers vor dem Näherungssensor erkannt und verhindert werden. Insbesondere bildet die berührungslose Annäherung des Nutzers die Auslöseaktion, welche als Auslösesignal an die Steuerungseinrichtung zur Ansteuerung des Türaktuators und des Schlossaktuators übermittelbar ist.

Bei einer berührungslosen Geste des Nutzers, die von der Sensoreinrichtung erkannt werden kann, kann es sich zum Beispiel um eine Wischbewegung mit der Hand des Nutzers vor der Sensoreinrichtung handeln. Insbesondere bildet die berührungslose Geste die Auslöseaktion, welche als Auslösesignal an die Steuerungseinrichtung zur Ansteuerung des Türaktuators und des Schlossaktuators übermittelbar ist.

Vorteilhaft ist, dass der Nutzer und die autorisierte Stelle das Schließen, die Verriegelung und die Entriegelung der Türe durch die Auslöseaktion berührungslos vornehmen kann. Insbesondere können hygienische Aspekte und behindertengerechte Maßnahmen durch die Betätigungsvorrichtung realisiert werden. Vorteilhaft ist weiterhin, dass die Anzeigeeinrichtung mittels der Steuerungseinrichtung dazu ansteuerbar ist, die Ausgabeinformationen, insbesondere den Türstatus, auf Basis des Auslösesignals anzuzeigen. Somit kann der Nutzer und die autorisierte Stelle auf dem aktuellen Stand über die angesteuerten Aktionen der Türe gehalten werden und/oder über Maßnahme informiert werden, die zur Betätigung der Türe vorzunehmen sind.

Insbesondere für den Fall, dass die Anzeigeeinrichtung ein Touchscreen ist, kann die Auslöseaktion durch den Nutzer auch manuell, insbesondere durch eine entsprechende berührungsempfindliche Eingabe auf dem Touchscreen, erfolgen. Alternativ oder optional ergänzend kann der Touchscreen auch dazu verwendet werden, die Eingabeinformationen (und z.B. auch die Autorisierung, wie einen Zahlencode, Fingerabdruck etc.) durch die autorisierte Stelle einzugeben und an die Steuerungseinrichtung zu übermitteln. Insbesondere ist eine individuelle Konfiguration der Ausgabeinformationen durch die autorisierte Stelle möglich.

In einer bevorzugten Ausführungsform der Erfindung weist die Steuerungs- und Informationsanlage mehrere, zum Beispiel zwei oder drei Mensch-Maschine-Schnittstellen auf. Vorzugsweise ist eine der Mensch-Maschine-Schnittstellen auf einer Seite der Türe, insbesondere außerhalb des Waschraums, angeordnet und mindestens eine weitere Mensch-Maschine-Schnittstelle auf der anderen Seite der Türe, insbesondere innerhalb des Waschraums angeordnet. Somit ist in vorteilhafter Weise gewährleistet, dass der Nutzer die Auslöseaktion auf beiden Seiten der Türe durchführen kann. Weiterhin kann dadurch gewährleistet werden, dass die autorisierte Stelle, über die dort integrierte Kommunikationsschnittstelle, durch entsprechende Eingabe der Eingabeinformationen Zugriff auf die über die Anzeigeeinrichtung ausgegebenen Anzeigen auf beiden Seiten der Türe hat.

Bevorzugt ist es im Rahmen der Erfindung, dass die Steuerungs- und Informationsanlage eine Notentriegelungseinrichtung umfasst. Vorzugsweise kann eine manuelle Entriegelung und Verriegelung und/oder ein manuelles Öffnen und Schließen der Türe mittels der Notentriegelungseinrichtung vorgenommen werden. Insbesondere ist die Steuerungseinrichtung bei Betätigung der Notentriegelungseinrichtung, z.B. durch Stromlosschaltung, deaktivierbar und/oder sie wird zum Öffnen oder Schließen der Türe veranlasst. Die Notentriegelungseinrichtung umfasst vorzugsweise mindestens einen Betätigungsknopf zur entsprechenden Veranlassung der beschriebenen Maßnahmen, auch betreffend die Steuerungseinrichtung oder zur Deaktivierung der Steuerungseinrichtung. Sie umfasst insbesondere auch mindestens einen Schalter zum Auslösen der Entriegelung oder Verriegelung, bevorzugt von außerhalb des Waschraums.

Eine mögliche Ausgestaltung der Erfindung sieht vor, dass die Steuerungseinrichtung eine Auswerteeinrichtung umfasst. Vorzugsweise ist die Auswerteeinrichtung dazu ausgebildet, das Auslösesignal auszuwerten. Alternativ oder zusätzlich ist die Auswerteeinrichtung dazu ausgebildet, Betriebsdaten des Türaktuators und des Schlossaktuators zu empfangen bzw. zu ermitteln und auszuwerten. Beispielsweise umfassen die Betriebsdaten Betriebszeiten und/oder ein Antriebsmoment des Türaktuators und des Schlossaktuators und/oder einen zum Betreiben des Türaktuators und des Schlossaktuators aufgewandten Energieverbrauch. Vorzugsweise ist auf Basis der ausgewerteten Betriebsdaten ein Betriebszustand der Steuerungs- und Informationsanlage, insbesondere durch die Auswerteeinrichtung, auswertbar. Möglich ist im Rahmen der Erfindung, dass anhand des Betriebszustands ein betriebsbedingter Verschleiß von Komponenten der Steuerungs- und Informationsanlage, zum Beispiel des Türaktuators oder des Schlossaktuators, erkannt werden kann und dass dadurch eine interne Fehlerbehandlung durch die Steuerungseinrichtung angesteuert werden kann. Für den Fall, dass die interne Fehlerbehandlung nicht erfolgreich durchgeführt werden kann, ist die Steuerungseinrichtung vorzugsweise dazu ausgebildet, die entsprechenden Komponenten auszuschalten.

In einer bevorzugten Ausführungsform der Erfindung ist der Betriebszustand über die Kommunikationsschnittstelle, insbesondere durch die Steuerungseinrichtung, an die autorisierte Stelle übermittelbar. Insbesondere kann der Betriebszustand zur Meldung von Notfällen, einer Türblockierung und/oder von notwendigen Wartungen auf das externe Ausgabegerät und/oder an das Bordnetz übermittelt werden. Alternativ oder optional ergänzend kann der Betriebszustand auf der Anzeigeeinrichtung angezeigt werden. Somit kann die autorisierte Stelle und/oder der Nutzer über den Betriebszustand informiert werden. Vorteilhaft ist, dass der Betriebszustand frühzeitig an die autorisierte Stelle übermittelt werden kann und dadurch sofortige oder rechtzeitige abgestimmte Maßnahmen ergriffen werden können.

Beispielsweise ist anhand der Betriebszeiten und des daraus ausgewerteten Betriebszustands ablesbar, wie oft die Türe betätigt und der Waschraum benutzt wurde. Insbesondere kann diesen Informationen entnommen werden, ob und wann der Waschraum gereinigt und/oder gewartet werden muss. Anhand der Geschwindigkeit des Türaktuators kann zum Beispiel ein Antriebsmoment errechnet werden, mit der die Tür geöffnet und geschlossen wird. Somit kann überprüft werden, ob die Geschwindigkeit und/oder das Antriebsmoment den Sicherheitsstandards entspricht. Es können Bewegungsprofile implementiert werden, auf Basis derer der Türaktuator und/oder der Schlossaktuator angesteuert werden können. So kann ein Klemmschutz realisiert und Verletzungen des Nutzers, der Besatzung und/oder des Personals verhindert werden.

Möglich ist es im Rahmen der Erfindung auch, dass in dem Speicher der Mensch-Maschine-Schnittstelle eine reguläre Nutzungszeit des Waschraums als Eingabeinformation hinterlegt ist, wobei die Nutzungszeit, insbesondere von der Auswerteeinrichtung, z.B. anhand von Zeitpunkten ermittelt werden kann, an denen die Tür von innerhalb des Waschraums geschlossen und verriegelt wird und wieder von innerhalb des Waschraums entriegelt und geöffnet wird. Optional kann zur Ermittlung der Nutzungszeit ein Timer in der Auswerteeinrichtung integriert sein. Bevorzugt wird der Timer gestartet, wenn die Türe, insbesondere von innerhalb des zu verriegelnden Waschraumes, verriegelt wird und zurückgesetzt, wenn die Türe entriegelt wird. In einer alternativen Variante kann der Timer ebenfalls zurückgesetzt werden, wenn eine der im Waschraum integrierten Komponenten betätigt wird.

Eine ermittelte Zeitüberschreitung der hinterlegten Nutzungszeit kann auf einen Notfall in dem Waschraum hinweisen, sodass entsprechende Hilfsmaßnahmen, insbesondere nach einer Mitteilung an die autorisierte Stelle, eingeleitet werden können. Beispielsweise kann die Besatzung und/oder das Personal die Türe durch die Steuerungseinrichtung entriegeln lassen und Hilfe leisten. Alternativ kann die Besatzung und/oder das Personal die Türe manuell, oder optional mittels der Notentriegelungseinrichtung, entriegeln, öffnen und die benötigte Hilfe leisten. Möglich ist es im Rahmen der Erfindung, dass die Steuerungseinrichtung die Betätigung der Notentriegelungseinrichtung erkennt und die Öffnung oder Schließung der Türe veranlasst. Alternativ ist es im Rahmen der Erfindung möglich, dass die Steuerungseinrichtung bei und/oder durch die Betätigung der Notentriegelungseinrichtung deaktiviert, insbesondere stromlos geschalten wird.

Anhand des Betriebszustands kann vorzugsweise auch ein Ausfall des Türaktuators und/oder des Schlossaktuators, eine Stromunterbrechung der Steuerungseinrichtung oder ein sonstiger Defekt von Komponenten der Steuerungs- und Informationsanlage erkannt und der autorisierten Stelle mitgeteilt werden. Vorteilhaft ist, dass Reinigungs-, Wartungs-, Reparatur- und/oder Hilfsmaßnahmen auf Basis des übermittelten Betriebszustands sicher und rechtzeitig durch die autorisierte Stelle eingeleitet werden können. Im Falle des Ausfalls mindestens einer Komponente der Steuerungs- und Informationsanlage, kann die Steuerungs- und Informationsanlage in einem degradierten Modus, also ohne Betrieb der jeweiligen Komponente, weiter genutzt werden.

In einer möglichen konstruktiven Umsetzung der Erfindung umfasst der Türaktuator einen Positionssensor. Vorzugsweise ist der Positionssensor dazu ausgebildet, eine Ist-Türposition, zum Beispiel geöffnet, geschlossen, teilweise geöffnet etc., zu erfassen und die Türposition als Positionssignal an die Steuerungseinrichtung zu übermitteln. Vorzugsweise ist die Steuerungseinrichtung dazu ausgebildet, den Türaktuator in Abhängigkeit von dem Positionssignal anzusteuern.

Eine bevorzugte konstruktive Realisierung der Erfindung sieht vor, dass der Schlossaktuator eine Rückstelleinrichtung, zum Beispiel eine Druckfeder, umfasst. Vorzugsweise ist das Verriegelungselement bei inaktiver oder deaktivierter Steuerungseinrichtung mittels der Rückstelleinrichtung aus der Verriegelungsposition lösbar und in eine Ausgangsposition zurückstellbar. Somit kann in vorteilhafter Weise abgesichert werden, dass die Türe entriegelt wird, wenn die Steuerungseinrichtung zum Beispiel aufgrund eines Stromausfalls oder Defekts inaktiv ist.

Eine alternative konstruktive Realisierung der Erfindung sieht vor, dass der Schlossaktuator mindestens von einer Seite des Waschraumes, vorzugsweise von beiden Seiten des Waschraumes, zugänglich ist und manuell ver- und entriegelt werden kann. Somit kann in vorteilhafter Weise abgesichert werden, dass die Türe manuell ver- und entriegelt werden kann. Dies ist insbesondere vorteilhaft, wenn die Steuerungseinrichtung zum Beispiel aufgrund eines Stromausfalls oder Defekts inaktiv ist.

In einer weiteren möglichen konstruktiven Umsetzung der Erfindung umfasst der Schlossaktuator einen weiteren Positionssensor. Vorzugsweise ist der weitere Positionssensor dazu ausgebildet, eine Ist-Position des Verriegelungselements, insbesondere die Verriegelungsposition oder Ausgangsposition, zu erfassen und als weiteres Positionssignal an die Steuerungseinrichtung zu übermitteln. Vorzugsweise ist die Steuerungseinrichtung dazu ausgebildet, den Schlossaktuator in Abhängigkeit von dem weiteren Positionssignal anzusteuern.

Die Aufgabe der Erfindung wird auch gelöst durch einen Waschraum nach Anspruch 13 eines Flugzeugs bzw. zur bestimmungsgemäßen Integration in ein Flugzeug, insbesondere in eine Kabine des Flugzeugs. Der Waschraum weist eine Wandstruktur auf, wobei die Wandstruktur den Waschraum zumindest abschnittsweise umschließt. Der Waschraum weist eine Türe auf, die in der Wandstruktur angeordnet ist. Der Waschraum umfasst die erfindungsgemäße Steuerungs- und Informationsanlage.

Der Waschraum und zumindest ein Teil dessen möglicher Ausführungsformen sowie die jeweiligen Vorteile wurden sinngemäß bereits im Zusammenhang mit der erfindungsgemäßen Steuerungs- und Informationsanlage erläutert.

Die Aufgabe der Erfindung wird auch gelöst durch ein Flugzeug nach Anspruch 14 mit dem erfindungsgemäßen Waschraum.

Das Flugzeug und zumindest ein Teil dessen möglicher Ausführungsformen sowie die jeweiligen Vorteile wurden sinngemäß bereits im Zusammenhang mit der erfindungsgemäßen Steuerungs- und Informationsanlage und dem erfindungsgemäßen Waschraum erläutert.

Die Aufgabe der Erfindung wird auch gelöst durch ein Verfahren, insbesondere in Form eines Steuerungs- und Informationsverfahrens, nach Anspruch 15. Das Verfahren wird mit Hilfe der erfindungsgemäßen Steuerungs- und Informationsanlage oder dem Waschraum oder dem Flugzeug durchgeführt und dient zur Ansteuerung der Türe des Waschraums des Flugzeugs und zum Austausch von Informationen über den Waschraum, insbesondere zwischen der Steuerungseinrichtung und einer entsprechenden Gegenstelle, nämlich dem Nutzer und/oder der autorisierten Stelle.

Im Rahmen des Verfahrens steuert die Steuerungseinrichtung den Türaktuator auf Basis der durch die Mensch-Maschine-Schnittstellen erfassten Auslöseaktion des Nutzers dazu an, die Türe zu öffnen oder zu schließen oder die Türe zu verriegeln oder zu entriegeln. Mittels der mindestens einen Kommunikationsschnittstelle werden im Rahmen des Verfahrens Eingabeinformationen der autorisierten Stelle an die Steuerungseinrichtung übermittelt und optional ergänzend auch Ausgabeinformationen der Steuerungseinrichtung an die autorisierte Stelle übermittelt.

Das Verfahren und zumindest ein Teil dessen möglicher Ausführungsformen sowie die jeweiligen Vorteile wurden sinngemäß bereits im Zusammenhang mit der erfindungsgemäßen Steuerungs- und Informationsanlage und dem erfindungemäßen Waschraum und dem erfindungsgemäßen Flugzeug erläutert.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergeben sich sogenannte "smart features" bei einer insbesondere berührungslos bedienbaren und verriegelbaren Tür eines Waschraums ("Touchless Door and Lock" und/oder "Automatic Door Lock").

Insbesondere ist ein fernbedienbares Verriegeln möglich, nämlich über die Kommunikationsschnittstelle zum Bordnetz ("Remote Locking"). Ziel ist es dabei, die Crew in einer stressigen Situationen zu entlasten. Dies steht in folgendem Kontext: Die Waschräume (Lavatorys) müssen vor den Flugphasen "taxi", "take-off" und "landing", sowie bei Turbulenzen von außerhalb des Waschraums verriegelt werden. Gleichzeitig sollte der Waschraum frei von Personen sein.

Zusätzlich zu einer manuellen Verriegelung durch die Crew (Sonderrechte, als autorisierte Stelle) von außerhalb einer jeden Lavatory kann die Tür ferngesteuert ver- und anschließend entriegelt werden (über Bordnetz - Kommunikationsschnittstelle).

Eine Befehlseingabe kann via (externer) Kommunikationsschnittstelle (z.B. zum Kabinenmanagementsystem oder zu einer vernetzten Applikation der Airline über Laptop, Tablet oder Smartphone, etc. als autorisierte Stelle) erfolgen. Alternativ können vom Flugzeug (Bordnetz) die entsprechenden Flugphasen / -zustände, aber auch Wetterdaten, wie z.B. turbulentes Wetter (aktuell oder vorausgesagt) erhalten und der Waschraum kontextabhängig ver- bzw. entriegelt werden (Bordnetz - Kommunikationsschnittstelle).

Das Remote Locking wird insbesondere ausgeführt, sobald der Waschraum unverriegelt und geschlossen ist. Eine Person in der extern (durch autorisierte Stelle) verriegelten Lavatory kann erkannt werden, indem die Interaktion irgendeines Gerätes in der Lavatory detektiert wird (z.B.: Sensoren und deren manuelle Bewegung oder die Nutzung von Aktuatoren bei manueller Nutzung). Im Zweifel kann eine "eingesperrte Person" den ferngesteuert (durch autorisierte Stelle) verriegelten Waschraum immer verlassen, d.h. das Entriegeln durch den Nutzer oder die autorisierte Stelle vom Inneren des Waschraums aus wird stets erlaubt (z.B. in Verbindung mit sofortiger automatischer erneuter Verriegelung nach Verlassen des Waschraums bzw. Schließen der Tür). Ein "Einsperren einer Person" ist daher unkritisch.

Die Erfindung ermöglicht auch die Realisierung eines sogenannten "User Alert":
Ziel ist dabei ein Hinweis auf mögliche medizinische Notfälle durch Absetzen einer Warnung an die autorisierte Stelle, z.B. die Crew via der externen Kommunikationsschnittstelle (also zum Bordnetz, z.B. Kabinenmanagementsystem oder vernetzte Applikation der Airline ).

Ein Zähler (Timer) startet, wenn eine Person die Tür von innen verriegelt. Der Grund hierfür: Ansonsten könnte eine manuelle Verriegelung auch von außerhalb des Waschraums durch die Crew als "Taxi", "take-off" oder "landing"- Vorbereitung oder bei Turbulenzen geschehen sein. Alternativ startet der Zähler, wenn der Waschraum verriegelt ist und kein Remote Locking (siehe oben) aktiv ist. In diesem Fall kann auch eine manuelle Nutzung erfasst werden, jedoch ein Fehlalarm entstehen, sollte die Tür durch die Crew manuell von außen verriegelt worden sein. Im letzteren Fall kann der Fehlalarm unwahrscheinlicher gemacht werden, wenn der User Alert via externer Kommunikationsschnittstelle (wieder z.B. Kabinenmanagementsystem oder vernetzte Airlineapplication) eine bestimmte Flugphase oder turbulentes Wetter meldet, in der eine Verriegelung sinnvoll ist. Dies gilt nämlich auch, falls die Crew manuell den Waschraum verriegelt hat.

Auf den Zustand des Nutzers kann dann über die Interaktion der diversen Equipments geschlossen werden (siehe oben bei "Remote Locking"). Der Zähler wird zurückgesetzt, wenn ein Equipment (z.B. Touchless Switch oder Aktuator) in der Lavatory bewegt / betätigt wurde.

Eine geeignete Zeit bis zum Auslösen des Alarms kann insbesondere von der autorisierten Stelle via der (externen) Kommunikationsschnittstelle (z.B. zum Kabinenmanagementsystem oder zur vernetzten Applikation der Airline ) konfiguriert werden. Durch die kontextuelle Erkennung des Nutzerverhaltens kann der Abstand zwischen gewissen Aktionen (z.B. Toilettendeckel aufklappen, Toilettendeckel zuklappen, Toilettenspülung) länger sein.

Die Erfindung ermöglicht auch einen "Off-Mode" und eine Fehlererkennung.

Einige bzw. alle eventuell vorhandenen Equipments im Waschraum können über die Kommunikationsschnittstelle ferngesteuert zu Wartungs- und/ oder Reinigungszwecken abgeschaltet werden. Dies kann optional auch lokal am Gerät geschehen. Grundsätzlich kann das System Fehlerzustände erkennen und darauf reagieren.

Für eine "predictive maintenance" können insbesondere alle relevanten Daten (z.B. time stamps, actuator cycles, power consumption, temperature, pressure) über die Kommunikationsschnittstelle (z.B. Kabinenmanagementsystem oder vernetzte Applikation der Airline) an einen Speicherort, z.B. einen sogenannten "data lake", gesendet, oder z.B. im oben genannten Speicher hinterlegt werden. Von dort aus werden die Daten dann insbesondere an ein Wartungssystem übermittelt, das Defekte vorhersagen und das Nutzungsverhalten tracken kann.

Gemäß der Erfindung ergibt sich ein intuitives Sensorkonzept: Der Nutzer muss keine komplexen Gesten kennen, sondern hält z.B. seine Hand nur für eine kurze Zeit in einem bestimmten Bereich vor einen Sensor der Mensch-Maschine-Schnittstelle. Dies vermeidet Fehlauslösungen, wie z.B. das Vorbeigehen einer Person. Die Sensoren haben z.B. eingebaute Piktogramme, sodass deren Nutzung besonders intuitiv ist.

Gemäß der Erfindung kann optional eine Notentriegelungseinrichtung, z.B. mit elektromechanischem Schalter, vorgesehen sein. Bei Betätigung wird z.B. der Schlossaktuator stromlos geschaltet. Die Tür kann insbesondere sowohl im aktiven (Bestromung des Türaktuators), als auch passiven Modus (=stromlos) jederzeit von Hand bedient und übersteuert werden. Die Antriebe sind daher insbesondere nichtselbsthemmend und können manuell bewegt werden. Das ist eine Anforderung sowohl an den Türaktuator, als auch den Schlossaktuator. Optional kann eine Rückstellfeder den Aktuator in die entriegelte Position zurückstellen. Alternativ kann auf diese Feder verzichtet werden. Der Aktuator ist dann auf beiden Seiten des Waschraums zugänglich und kann manuell verstellt werden.

Die Erfindung bietet explizit eine Schnittstelle für flugzeug- und kabinenseitige Systeme, nämlich die autorisierte Stelle in Form des Bordnetzes. Diese stellt somit eine zweite Bedienschnittstelle dar, zusätzlich zu anderen Kommunikationsschnittstellen (auch Mensch-Maschine-Schnittstelle), die insbesondere als Touchless Sensor ausgeführt sind, um weitere Funktionen zu ermöglichen. Die autorisierte Stelle, z.B. Crew, kann Inputs für die Steuerungseinrichtung, Anzeigeeinrichtung, Mensch-Maschine-Schnittstelle usw. geben und Informationen erhalten. Die Kommunikationsschnittstelle / Mensch-Maschine-Schnittstelle ist eine solche zur (zentralen) Steuerungseinrichtung.

Bei einem Einbau der Steuerung- und Informationsanlage in einen Waschraum bzw. in ein Flugzeug muss die Kommunikationsschnittstelle nicht zwangsweise genutzt werden. Die Erfindung kann daher auch als stand-alone Lösung (=keine Kommunikationsschnittstelle an eine Gegenstelle angeschlossen) genutzt werden.

Türantrieb und Schlossfunktion sind gemäß der Erfindung getrennt. Daher kann das mechanische Schloss, als auch z.B. ein integrierter Linearaktuator manuell übersteuert werden, wie oben beschrieben.

Insbesondere wird ein Direktantrieb (Türaktuator) und beim Türschlossaktuator ein Gewinde hoher Steigung bzw. eine reibungsarme Kugelumlaufspindel vorgesehen.

Die Erfindung erlaubt folgende Notfallmechanismen:
Ein "manual override" kann stets vorgenommen werden. Entweder wird die Notentriegelungseinrichtung betätigt, wodurch der Waschraum entriegelt wird. Alternativ ist der Schlossaktuator von beiden Seiten des Waschraums (außerhalb, innerhalb) zugänglich und kann manuell verschoben wird.

Gemäß der Erfindung wird eine Anbindung an die Kabine (datentechnisch) ermöglicht.

Einer der wesentlichen Vorzüge der Erfindung ist die Kabinenanbindung, also die Anbindung der Steuerungseinrichtung an eine autorisierte Stelle (u.a. Cabin Crew, Kabinenmanagementsystem, Applikation der Airline, z.B. über WLAN). Dies ermöglicht das Senden von Nutzungsdaten über die Kommunikationsschnittstelle an einen angeschlossenen Server / Speicher (Data Lake). Die Steuerungs- und Informationsanlage kann aber auch ohne Kabinenanbindung nachgerüstet werden, siehe oben.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: eine stark schematische Darstellung einer Steuerungs- und Informationsanlage innerhalb einer Systemarchitektur mit einem Flugzeug und einem in dem Flugzeug angeordneten Waschraum mit Tür;
- Figur 2: eine schematische Darstellung einer Wischgeste mit einer Hand vor einer Sensoreinrichtung der Steuerungs- und Informationsanlage;
- Figur 3: einen Türaktuator der Steuerungs- und Informationsanlage zum Öffnen und Schließen der Türe des Waschraums;
- Figur 4: einen Schlossaktuator der Steuerungs- und Informationsanlage zum Verriegeln und Entriegeln der Türe des Waschraums.

Übereinstimmende oder gleiche Teile sind in den Figuren mit den gleichen Bezugszeichen versehen.

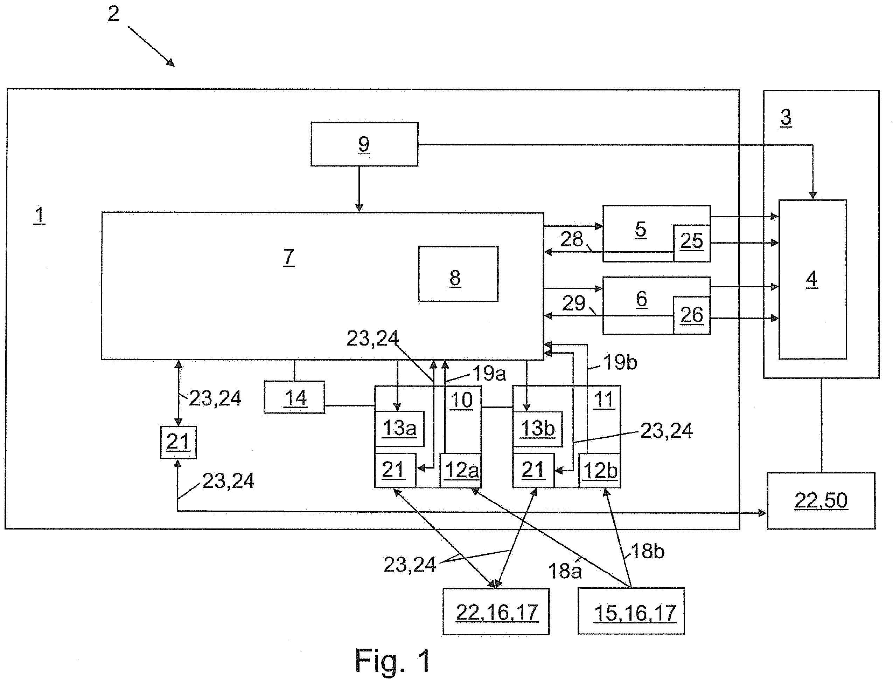

Figur 1 zeigt in einer schematischen Darstellung eine Steuerungs- und Informationsanlage 1, welche in eine Systemarchitektur integriert ist. Die Systemarchitektur ist hier ein Flugzeug 2, hier ein Passagierflugzeug, mit einem datentechnischen Bordnetz 50, hier symbolisch dargestellt durch einen Bordcomputer, und einem Waschraum 3. Der Waschraum 3 ist durch eine nicht dargestellte Stromversorgung des Flugzeugs 2 versorgt und über einen Datenbus kommunikativ mit dem Bordnetz 50 verbunden und damit daten- bzw. kommunikationstechnisch in das Flugzeug 2 eingebunden.

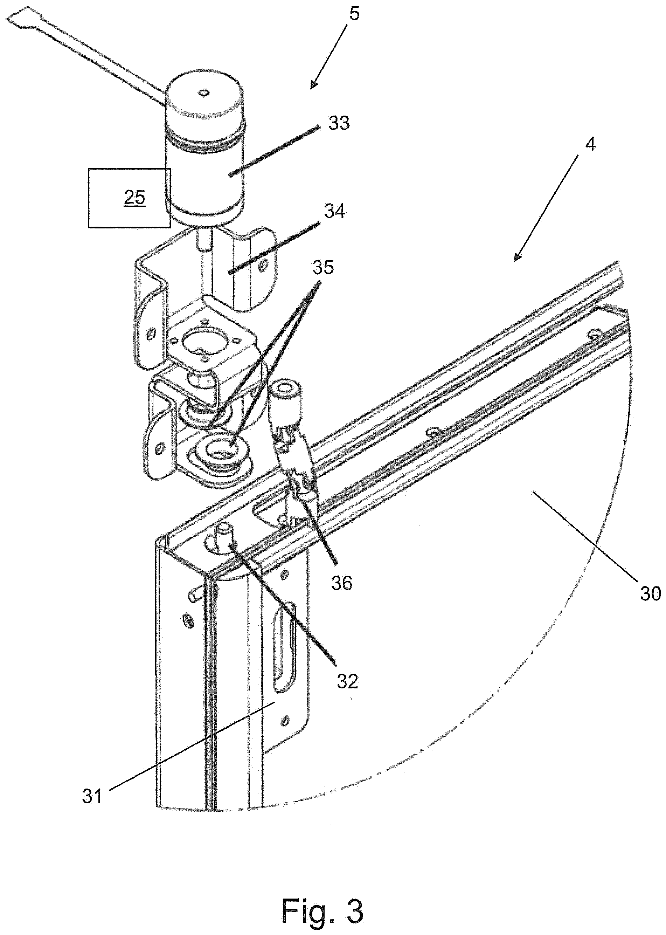

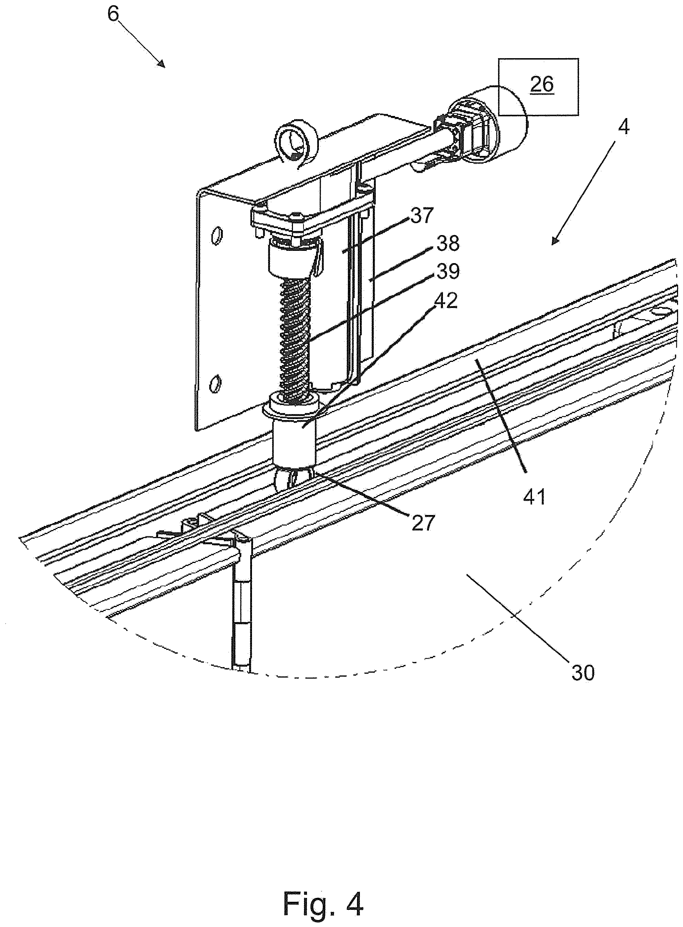

Der Waschraum 3 weist eine Türe 4 auf, die in einer nicht dargestellten, den Waschraum 3 umgebenden Wandstruktur angeordnet ist. Die Türe 4 ist gemäß der Figuren 3 und 4 als eine Falttüre mit mehreren Türblättern 30 ausgebildet, wobei die Türblätter 30 über Türscharniere 31 schwenkbar miteinander verbunden sind. Über die Türe 4 kann der Waschraum 3 von Personen betreten und wieder verlassen werden. Der Waschraum 3 ist in einer Kabine des Flugzeugs 2 integriert.

Die Steuerungs- und Informationsanlage 1 ist zur Ansteuerung der Türe 4 und zum Austausch von einem Zustand des Waschraums 3 beschreibenden Informationen mit dem Waschraum 3 ausgebildet. Sie umfasst einen Türaktuator 5, einen Schlossaktuator 6, eine Steuerungseinrichtung 7 mit einer Auswerteeinrichtung 8 und eine Notentriegelungseinrichtung 9. Die Steuerungseinrichtung 7 ist ebenfalls durch die Stromversorgung des Flugzeugs 2 versorgt und über einen Datenbus kommunikativ mit dem Bordnetz 50 verbunden und damit daten- bzw. kommunikationstechnisch in das Flugzeug 2 eingebunden.

Die Notentriegelungseinrichtung 9 umfasst einen nicht dargestellten Betätigungsknopf zur Deaktivierung und/oder Stromunterbrechung der Steuerungseinrichtung 7 und einen nicht dargestellten Schalter zum Betätigen des Schlossaktuators 6, insbesondere von außerhalb des Waschraums 3. Somit kann die Tür 4 mit Hilfe der Notentriegelungseinrichtung 9 auch bei Stromausfall oder sonstigen Defekten geöffnet und geschlossen werden und die Steuerungseinrichtung 7 außer Betrieb gesetzt werden (symbolisch durch Pfeile dargestellt).

Die Steuerungs- und Informationsanlage 1 umfasst mehrere Mensch-Maschine-Schnittstellen, hier eine erste Mensch-Maschine-Schnittstelle 10 und eine zweite Mensch-Maschine-Schnittstelle 11. Die erste Mensch-Maschine-Schnittstelle 10 umfasst eine Sensoreinrichtung 12a und die zweite Mensch-Maschine-Schnittstelle 10 eine zweite Sensoreinrichtung 12b. Die Sensoreinrichtungen 12a, 12b umfassen einen nicht näher dargestellten Sensor, welcher hier ein kapazitiver Näherungssensor, alternativ ein optischer Sensor, nämlich ein time-of-flight-Sensor, ist. Jede Mensch-Maschine-Schnittstelle 10,11 umfasst außerdem eine jeweilige Anzeigeeinrichtung 13a, b. Die Anzeigeeinrichtung 13a, b ist hier als ein Display, alternativ als ein Monitor, ausgebildet. Sie umfasst einen Touchscreen, auf dem von Personen Eingaben vorgenommen werden können und auf dem Anzeigeinhalte und/oder Audioinhalte ausgegeben werden können. Die Mensch-Maschine-Schnittstellen 10, 11 sind an einen gemeinsam genutzten Speicher 14 angeschlossen, der wiederum mit der Steuerungseinrichtung 7 verbunden ist. Jede der Mensch-Maschine-Schnittstellen 10, 11 weist außerdem eine Kommunikationsschnittstelle 21 auf. Diese dient der Kommunikation einer autorisierten Stelle 22 mit der Steuerungseinrichtung 7.

Die erste Mensch-Maschine-Schnittstelle 10 ist auf einer ersten Seite der Türe 4 außerhalb des Waschraums 3 angeordnet und die zweite Mensch-Maschine-Schnittstelle 10 ist auf einer anderen Seite der Türe 4 innerhalb des Waschraums 3 angeordnet.

Im Flugzeug 2 sind z.B. während eines Fluges ein Nutzer 15 der Türe 4 in Form eines Passagiers sowie ein Kabinenpersonal 16 in Form eines Flugbegleiters anwesend.

Außerdem ist bei einer Stillstandszeit des Flugzeuges 2 Servicepersonal 17 in Form einer Reinigungskraft im Flugzeug 2 anwesend. Das Kabinenpersonal 16, das Servicepersonal 17 und das Bordnetz 50 des Flugzeugs 2 bilden eine in Bezug auf die Türe 4 speziell, d.h. mit Sonderechten autorisierte Stelle 22 innerhalb der Systemstruktur bzw. des Flugzeuges 2. Der Nutzer 15 dagegen ist ein "nicht speziell autorisierter Nutzer" der Türe 4. Der Nutzer 15 besitzt daher nur Standardrechte zur Nutzung der Türe 4.

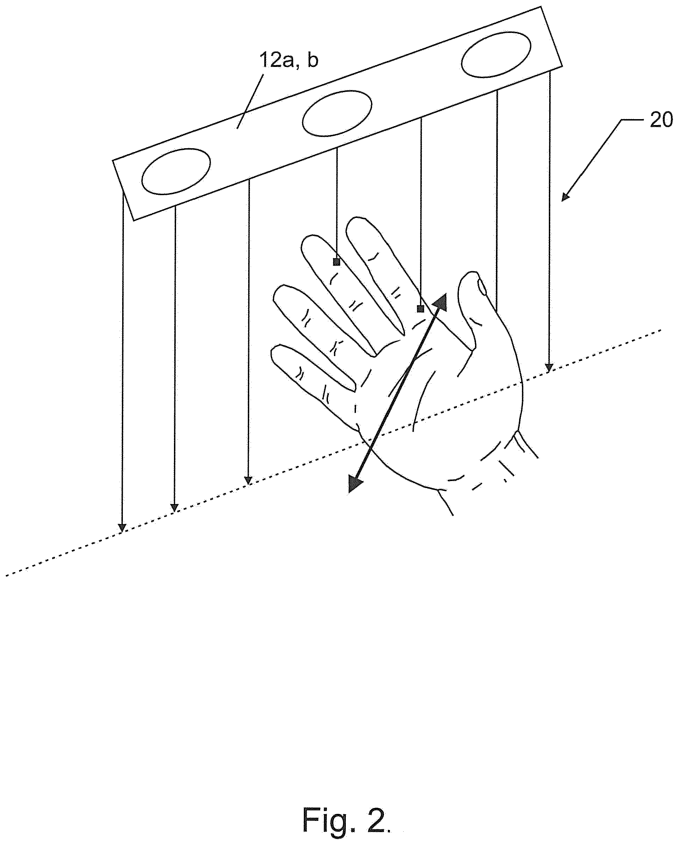

Der Nutzer 15 kann von außerhalb des Waschraums 3 über die Mensch-Maschine Schnittstelle 10 nur die offene Türe 4 schließen und die nicht verriegelte Türe 4 öffnen, um den Toilettenraum 3 zu betreten (Standardrechte). Hierzu erfasst die erste Sensoreinrichtung 12a eine Auslöseaktion 18a des Nutzers 15, hier die in Fig. 2 erläuterte Wisch-Geste 20. Der Nutzer 15 kann über die Mensch-Maschine Schnittstelle 11 von innerhalb des Waschraums 3 die offene Türe 4 schließen und die geschlossene Türe 4 von innerhalb des Waschraums 3 verriegeln oder entriegeln, um den Toilettenraum 3 bedarfsgerecht zu nutzen (Standardrechte). Hierzu erfasst die zweite Sensoreinrichtung 12b eine Auslöseaktion 18b des Nutzers 15, hier wieder die Wisch-Geste 20. Auch die autorisierten Stellen 22 in Form von Personen (Flugpersonal 16, Servicepersonal 17) können die Auslöseaktion 18a, 18b in entsprechender Weise vornehmen, ohne hierzu ihre besondere Autorisierung zu nutzen. In dieser Funktion entsprechen sie dabei "normalen" Nutzern 15 und verfügen nur über die Standardrechte.

Die Auslöseaktion 18a, 18b ist alternativ auch eine einfache Annäherung des Nutzers 15 an die Sensoreinrichtung 12a, 12b. Bei der Wisch-Geste 20 handelt es sich um eine Wischbewegung mit der Hand des Nutzers 15 vor der Sensoreinrichtung 12a,12b, so wie es in Bezug auf Figur 2 erläutert ist. Die Auslöseaktion 18a, 18b kann alternativ oder optional ergänzend auch durch eine entsprechende Eingabe des Nutzers 15 auf dem Touchscreen der Anzeigeeinrichtung 13 erfolgen, z.B. durch Berühren eines "Tür-Öffnen / Schließen "- oder "Tür Ver- / Entriegeln"-Symbols.

Die jeweilige Sensoreinrichtung 12a, 12b übermittelt die Auslöseaktionen 18a, 18b als Auslösesignal 19a, 19b an die Steuerungseinrichtung 7. Die Steuerungseinrichtung 7 steuert den Türaktuator 5 auf Basis der Auslösesignale 19a, b entsprechend dazu an, die Türe 4 zu öffnen oder zu schließen. Sie steuert auch den Schlossaktuator 6 auf Basis des Auslösesignals 19a, b dazu an, die Türe 4 zu verriegeln oder zu entriegeln.

Der Türaktuator 5 und der Schlossaktuator 6 umfassen Positionssensoren 25, 26 (siehe auch Figuren 3 und 4). Der Positionssensor 25 des Türaktuators 5 erfasst eine aktuelle Ist-Position der Türe 4, insbesondere ob die Türe 4 geöffnet, teilweise geöffnet oder geschlossen ist. Der Positionssensor 26 des Schlossaktuators 6 erfasst eine Stellung eines Verriegelungselementes 27 des Schlossaktuators 6 (siehe Figur 4) und somit insbesondere, ob die Türe 4 verriegelt oder entriegelt ist.

Die Position der Türe 4 und die Stellung des Verriegelungselements 27 werden von den Positionssensoren 25,26 als Positionssignale 28, 29 an die Steuerungseinrichtung 7 übermittelt. Die Auswerteeinrichtung 8 wertet das von dem Türaktuator 5 übermittelte Positionssignal 28 und das von dem Schlossaktuator 6 übermittelte Positionssignal 29 aus. Die Steuerungseinrichtung 7 steuert den Türaktuator 5 in Abhängigkeit des Positionssignals 28 dazu an, ein Drehmoment zum Öffnen bzw. Schließen der Türe 4 zu erzeugen. Die Steuerungseinrichtung 7 steuert den Schlossaktuator 6 in Abhängigkeit des Positionssignals 29 dazu an, das Verriegelungselement 27 in eine Verriegelungsstellung bzw. in eine Ausgangsstellung zu überführen, um die Türe 4 zu verriegeln bzw. zu entriegeln.

Die Steuerungseinrichtung 7 steuert weiterhin die Anzeigeeinrichtungen 13a, 13b dazu an, entsprechende Informationen auszugeben, z.B. zu initiierende Auslöseaktionen 18a, 18b anzuzeigen. Die zu initiierenden Auslöseaktionen 18a, 18b sind insbesondere Aufforderungen an die Personen über als nächstes auszuführende Maßnahmen. Die Steuerungseinrichtung 7 steuert die Anzeigeeinrichtungen 13a, 13b auch dazu an, die Auslöseaktionen 18a, 18b anzuzeigen, die ein Nutzer 15 oder die autorisierte Stelle 22 bereits vorgenommen hat. Weiterhin kann die Steuerungseinrichtung 7 die Anzeigeeinrichtung 13a, 13b dazu ansteuern, den aktuellen Türstatus, insbesondere ob die Türe geöffnet, geschlossen, entriegelt oder verriegelt ist, anzuzeigen.

Durch Integration der Kommunikationsschnittstelle 21 in die beiden Mensch-Maschine-Schnittstellen 10,11 besteht auch die Möglichkeit, dass eine autorisierte Stelle 22 in Form einer Person Informationen mit der Steuerungseinrichtung 7 austauschen kann. Es können von der autorisierten Stelle 22 Eingabeinformationen 23 an die Steuerungseinrichtung 7 kommuniziert werden und von der Steuerungseinrichtung 7 Ausgabeinformationen 24 an die autorisierte Stelle 22 übermittelt werden. Dies kann wieder über die Anzeigeeinrichtungen 13a, b, die Sensoreinrichtungen 12a, 12b, aber auch über sonstige Kommunikation, z.B. RFID / WLAN / NFC usw., erfolgen, wenn entsprechende Kommunikationsmöglichkeiten in den Mensch-Maschine-Schnittstellen 10,11 vorgesehen sind und die autorisierten Stellen 22 entsprechend zu solcher Kommunikation ausgerüstet sind. Gegebenenfalls sind die Anzeigeeinrichtungen 13a, b bzw. die Sensoreinrichtungen 12a, 12b also auch Teile der Kommunikationsschnittstellen 21 bzw. weisen eine entsprechende Doppelfunktionalität zu den oben bereits genannten Funktionalitäten auf.

Die Eingabeinformationen 23 umfassen auch Kommandos der autorisierten Stelle 22, mittels denen ein besonders autorisierter Zugriff der autorisierten Stelle 22 auf die Steuerungseinrichtung 7 gewährleistet ist. Die Steuerungseinrichtung 7 kann durch die autorisierte Stelle 22 mittels der Eingabeinformationen 23 z.B. dazu veranlasst werden, den Türaktuator 5 und/oder den Schlossaktuator 6 in entsprechender Weise besonders autorisiert anzusteuern, z.B. kann dann auch von der Mensch-Maschine-Schnittstelle 10 aus die Türe 4 als Sonderrecht von außerhalb des Waschraums 3 ver- oder entriegelt werden, was dem Nutzer 15 mit seinen Standardrechten nicht möglich ist. Dies erfolgt zum Beispiel in Abhängigkeit von bestimmten Flugphasen wie "Taxi", "Start", "Landung" und/oder bei auftretenden "Turbulenzen", in die das Flugzeug 2 im Flug gerät. Auch zur Wartung und/oder Reinigung des Waschraums 3 kann die autorisierte Stelle 22 (z.B. Servicepersonal 17) entsprechende Eingabeinformationen 23 an die Steuerungseinrichtung 7 übermitteln.

Weiterhin kann die Steuerungseinrichtung 7 durch die autorisierte Stelle 22 mittels der Eingabeinformationen 23 deaktiviert, insbesondere stromlos geschaltet werden. Dies kann insbesondere dann erfolgen, wenn eine Störung von Komponenten der Steuerungs- und Informationsanlage 1 oder ein Notfall vorliegt. In diesem Fall kann zum Beispiel auch von einer Person die Notentriegelungseinrichtung 9 betätigt werden, um die Türe 4 manuell zu entriegeln und zu öffnen.

Die autorisierte Stelle 22 kann die Eingabeinformationen 23 über den Touchscreen der Anzeigeeinrichtung 13a, b eingeben und an die Steuerungseinrichtung 7 übermitteln. Über den Touchscreen und/oder über sonstige Kanäle der Kommunikationsschnittstellen 21 (WLAN, RFID, NFC, ..., siehe oben) kann die autorisierte Stelle 22 auch Inhalte von Dateien und/oder Speichermedien auf dem Speicher 14 abspeichern, welche von der Steuerungseinrichtung 7 abgerufen werden können. Hierzu kann eine weitergehende spezielle Autorisierung, zum Beispiel durch Passworteingabe, durch die autorisierte Stelle 22 notwendig sein, um z.B. den hierzu berechtigten Personenkreis weiter einzuschränken. Die Kommunikation über die Kommunikationsschnittstelle 21, insbesondere die weitergehende Autorisierung, kann über den Touchscreen oder über eine sogenannte NFC (near field communication) mit der entsprechenden Mensch-Maschine-Schnittstelle 10, 11vorgenommen werden. Die Steuerungseinrichtung 7 überprüft die Autorisierung und schaltet den Zugriff der autorisierten Stelle 22 auf die entsprechende Funktionalität frei.

Die Ausgabeinformationen 24 können über die Anzeigeeinrichtung 13a, 13b ausgegeben oder über die Kommunikationsschnittstelle 21 an ein externes Ausgabegerät bei der autorisierten Stelle 22 übermittelt, insbesondere dann dort angezeigt, werden, z.B. also auf einem Laptop des Servicepersonals 17. Beispielsweise können die Inhalte der Dateien und/oder der Speichermedien, die auf dem Speicher 14 abgespeichert wurden, als individuelle Anzeigen auf der Anzeigeeinrichtung 13a, 13b angezeigt werden.

Die Ausgabeinformationen 24 umfassen auch die umgesetzten Aktionen, die die Steuerungseinrichtung 7 infolge der Eingabeinformationen 23 vorgenommen hat. So können z.B. die Ausgabeinformationen 24 in Form des Türstatus und/oder der zu initiierenden oder initiierten Aktionen durch den Nutzer 15 ausgegeben, insbesondere angezeigt, werden.

Die Ausgabeinformationen 24 umfassen weiterhin Statusmeldungen über Wartung, Instandhaltung, Fehler und/oder Notfall, welche auf der Anzeigeeinrichtung 13a, 13b und/oder auf dem externen Ausgabegerät der autorisierten Stelle 22 ausgegeben werden. Die Statusmeldungen können auf Basis eines Betriebszustands der Steuerungs- und Informationsanlage 1 erstellt werden. Der Betriebszustand kann in Abhängigkeit von Betriebsdaten des Türaktuators 5 und/oder des Schlossaktuators 6 (z.B. der Positionssensoren 25,26) ermittelt werden, welche von der Steuerungseinrichtung 7 erfasst und von der Auswerteeinrichtung 8 ausgewertet werden.

Die Betriebsdaten können auch Betriebszeiten, einen Energieverbrauch und/oder ein Antriebsmoment des Türaktuators 5 und/oder des Schlossaktuators 6 umfassen. Der Betriebszustand kann zum Beispiel auf Basis der ermittelten Betriebszeiten angeben, dass der Waschraum 3 gereinigt und/oder gewartet werden muss und/oder dass ein Defekt von Komponenten der Steuerungs- und Informationsanlage 1 vorliegt. Eine Zeitüberschreitung der in der Steuerungseinrichtung 7 hinterlegten üblichen Betriebszeiten des Waschraums 3 kann insbesondere auf einen Notfall in dem Waschraum 3 oder auf eine blockierte Türe 4 hinweisen. Durch die übermittelten Ausgabeinformationen 24 kann die autorisierte Stelle 22 und auch der Nutzer 15 wichtige Meldungen erhalten und entsprechende Maßnahmen einleiten.

Die Kommunikation des Bordnetzes 50 als autorisierte Stelle 22 mit der Steuerungseinrichtung 7 dient z.B. zur automatischen Verriegelung der Tür 4 flugphasenabhängig über z.B. einen Flugrechner und Sensorik des Bordnetzes 50. Hier kann insbesondere eine automatisierte Manipulation bzw. Steuerung der Türe 4 erfolgen, ohne Personen wie Flugbegleiter etc. mit dieser Aufgabe belasten zu müssen, z.B. Verriegelung bei den im Bordnetz 50 bekannten Flugphasen "Taxi", "Start", "Landung", sowie Informationen "Turbulenzen", "Anschnallzeichen eingeschaltet".

Figur 2 zeigt symbolisch eine Wisch-Geste 20, bei der eine Person ihre Hand in Richtung des dargestellten Doppelpfeils vor der Sensoreinrichtung 12a, b hin und her bewegt. Die Sensoreinrichtung 12a, b erfasst diese Bewegung berührungslos, z.B. durch elektrisch kapazitive Erfassung, was durch Pfeile angedeutet ist.

Die Figur 3 zeigt den Türaktuator 5 der Steuerungs- und Informationsanlage 1 in einer Explosionsdarstellung. Der Türaktuator 5 ist dazu ausgebildet, die Türe 4 zu öffnen und zu schließen. Gezeigt ist auch ein Ausschnitt eines der Türblätter 30 der Türe 4, wobei in dem Türblatt 30 ein Türscharnier 31 und eine Kupplung 32 verbaut ist.

Über die Kupplung 32 ist der Türaktuator 5 mechanisch mit der Tür 4 verbunden. Alternativ kann die Kupplung 32 so ausgebildet sein, dass die Türe 3 über die Kupplung 32 mechanisch mit der Wandstruktur des Waschraums 3 verbunden ist und der Türaktuator 5 nicht über diese an die Türe 4 angebunden ist. Möglich ist auch, dass die Kupplung 32 von der Wandstruktur gelöst werden kann, sodass die Türe 4 aus der Wandstruktur entnommen werden kann.

Der Türaktuator 5 umfasst eine Antriebseinheit 33 mit einem Elektromotor und einem Getriebe zur nicht-selbsthemmenden Kraftübertragung, ein Gehäuse 34, zwei Gleitlager 35 und ein Doppelwellengelenk 36. Der Elektromotor der Antriebseinheit 33 ist in nicht dargestellter Weise an die Stromversorgung der Steuerungseinrichtung 7 bzw. des Flugzeugs 2 angebunden. Das Doppelwellengelenk 36 ist mit dem Türscharnier 31 wirkverbunden. Es überträgt ein durch den Elektromotor erzeugtes Drehmoment über das Getriebe auf das Türscharnier 31, sodass dieses betätigt, das Türblatt 30 geschwenkt wird und die Türe 4 eine Öffnungs- oder Schließbewegung ausführt. Die Gleitlager 35 sind dazu ausgebildet, Querkräfte bei der Übertragung des Drehmoments durch das Doppelwellengelenk 36 abzufangen und ermöglichen ausschließlich eine Schwenkbewegung des Türscharniers 31.

Der Türaktuator 5 umfasst den hier nur symbolisch angedeuteten Positionssensor 25 (siehe auch Figur 1), welcher die Ist-Türposition der Türe 4 erfasst und als das Positionssignal 28 an die Steuerungseinrichtung 7 übermittelt.

In der Figur 4 sind der Schlossaktuator 6 und ein Ausschnitt der Türe 4 mit Türblättern 30 gezeigt. Das Türblatt 30 weist eine Führungsschiene 41 auf, mittels der sie in der Wandstruktur des Waschraums 3 bei der Öffnungs- und Schließbewegung geführt ist. Der Schlossaktuator 6 ist in der Wandstruktur des Waschraums 3, insbesondere oberhalb der Türe 4 integriert. Er ist dazu ausgebildet, die Türe 4 zu verriegeln und zu entriegeln und verhindert insbesondere ein manuelles Öffnen der Türe 4 im Normalbetrieb der Steuerungs- und Informationsanlage 1.

Der Schlossaktuator 6 umfasst eine Antriebseinheit 37 mit einem Elektromotor und einem Getriebe zur nicht-selbsthemmenden Kraftübertragung, ein Gehäuse 38, eine Steilgewindespindel 39, insbesondere als Bestandteil des Getriebes, und ein Verriegelungselement 27. Das Verriegelungselement 27 ist als ein Bolzen ausgebildet. Der Elektromotor ist - wiederum nicht dargestellt - an das Stromnetz der Steuerungseinrichtung 7 bzw. des Flugzeugs 2 angebunden und wird über die gesamte Verriegelungsdauer, in der die Türe 4 verriegelt ist, bestromt, insofern eine Feder zur stromlosen Entriegelung verbaut ist. Alternativ wird der Schlossaktuator 6 nur für die Ver- und Entriegelung bestromt.

Über das Getriebe, insbesondere über die Steilgewindespindel 39, wird das von dem Elektromotor erzeugte Drehmoment in eine lineare Bewegung umgewandelt. Das Verriegelungselement 27 ist in einem Gleitlager 42 geführt, das eine Drehbewegung unterbindet, Querkräfte der Antriebseinheit 37 abfängt und so die lineare Bewegung des Verriegelungselements 27 ermöglicht. Das Verriegelungselement 27 wird in die lineare Richtung in die Türe 4 hinein, oder alternativ hinter diese bewegt und blockiert diese in einem zentralen Bereich der Türe 4, zum Beispiel im Bereich eines mittleren Türblatts 30 der Türe 4, an dem dort angeordneten Türscharnier 31. Insbesondere wird dadurch die Öffnungs- und Schließbewegung der Türe 4 verhindert.

In dem Verriegelungselement 27 ist eine nicht gezeigte Rückstelleinrichtung, insbesondere eine Druckfeder, integriert. Die Rückstelleinrichtung stellt das Verriegelungselement 27 im stromlosen Zustand des Elektromotors in eine Ausgangsstellung zurück, sodass die Türe 4, insbesondere aus Sicherheitsaspekten, entriegelt ist und geöffnet werden kann. In einer alternativen Umsetzung kann das zugängliche Verriegelungselement 27 manuell verschoben werden und auf eine Rückstelleinrichtung verzichtet werden.

Der Schlossaktuator 6 umfasst den hier wieder symbolisch dargestellten Positionssensor 26 (siehe auch Figur 1), welcher die Ist-Position des Verriegelungselements 27 erfasst und als das Positionssignal 29 an die Steuerungseinrichtung 7 übermittelt.

### Bezugszeichenliste

- 1: Steuerungs- und Informationsanlage
- 2: Flugzeug
- 3: Waschraum
- 4: Türe
- 5: Türaktuator
- 6: Schlossaktuator
- 7: Steuerungseinrichtung
- 8: Auswerteeinrichtung
- 9: Notentriegelungseinrichtung
- 10: erste Mensch-Maschine-Schnittstelle
- 11: zweite Mensch-Maschine-Schnittstelle
- 12a, 12b: Sensoreinrichtungen
- 13a, 13b: Anzeigeeinrichtungen
- 14: Speicher
- 15: Nutzer
- 16: Flugpersonal
- 17: Servicepersonal
- 18a, 18b: Auslöseaktion
- 19a, 19b: Auslösesignal
- 20: Geste
- 21: Kommunikationsschnittstelle
- 22: autorisierte Stelle
- 23: Eingabeinformationen
- 24: Ausgabeinformationen
- 25: Positionssensor des Türaktuators
- 26: Positionssensor des Schlossaktuators
- 27: Verriegelungselement
- 28: Positionssignal des Positionssensors des Türaktuators
- 29: Positionssignal des Positionssensors des Schlossaktuators
- 30: Türblatt
- 31: Türscharnier
- 32: Kupplung
- 33: Antriebseinheit des Türaktuators
- 34: Gehäuse
- 35: Gleitlager für das Doppelwellengelenk
- 36: Doppelwellengelenk
- 37: Antriebseinheit des Schlossaktuators
- 38: Gehäuse
- 39: Steilgewindespindel
- 41: Führungsschiene
- 42: Gleitlager für das Verriegelungselement
- 50: Bordnetz

## Patentansprüche

1. Steuerungs- und Informationsanlage (1) für einen Waschraum (3) eines Flugzeugs (2), wobei der Waschraum (3) eine Türe (4) aufweist,
mit einem Türaktuator (5) zum Öffnen und Schließen der Tür (4),
mit einem Schlossaktuator (6) zum Verriegeln und Entriegeln der Tür (4),
mit einer Steuerungseinrichtung (7) zur Ansteuerung des Türaktuators (5) und des Schlossaktuators (6),
mit mindestens einer Mensch-Maschine-Schnittstelle (10, 11) zur Erfassung einer die Türe (4) betreffenden Auslöseaktion (18a, 18b) eines Nutzers (15) der Türe (4) und zur Übermittlung der Auslöseaktion (18a, 18b) als Auslösesignal (19a, 19b) an die Steuerungseinrichtung (7),
**gekennzeichnet durch**
mindestens eine Kommunikationsschnittstelle (21) zur Übermittlung von Eingabeinformationen (23) einer vom Nutzer (15) verschiedenen autorisierten Stelle (22) an die Steuerungseinrichtung (7) und optional auch zur Übermittlung von Ausgabeinformationen (24) der Steuerungseinrichtung (7) an die autorisierte Stelle (22).

2. Steuerungs- und Informationsanlage (1) nach Anspruch 1, **dadurch gekennzeichnet, dass** die Mensch-Maschine-Schnittstelle (10, 11) eine Anzeigeeinrichtung (13a, 13b), optional zur Ausgabe der Eingabeinformationen (23) und/oder der Ausgabeinformationen (24), und/oder wenigstens eine der Kommunikationsschnittstellen (21) umfasst.

3. Steuerungs- und Informationsanlage (1) nach Anspruch 2, **dadurch gekennzeichnet, dass** eine der autorisierten Stellen (22) ein Bordnetz (5) des Flugzeuges (2) ist und mindestens eine der Kommunikationsschnittstellen (21) zur Kommunikation mit dem Bordnetz (5) eingerichtet ist.

4. Steuerungs- und Informationsanlage (1) nach einem der Ansprüche 1 bis 3, **dadurch gekennzeichnet, dass** die Mensch-Maschine-Schnittstelle (10, 11) eine Sensoreinrichtung (12a, 12b) umfasst, wobei die Sensoreinrichtung (12a, 12b) mindestens einen optischen und/oder kapazitiven Näherungssensor zur Erfassung einer berührungslosen Annäherung des Nutzers (15) und/oder zur Erfassung einer berührungslosen Geste (20) des Nutzers (15) als Auslöseaktion (18a, 18b) umfasst.

5. Steuerungs- und Informationsanlage (1) nach einem der Ansprüche 2 bis 4, **dadurch gekennzeichnet, dass** die Anzeigeeinrichtung (13a, 13b) auf Basis des Auslösesignals (18a 18b) zur Anzeige der Ausgabeinformationen (24) ansteuerbar ist, wobei die Ausgabeinformationen (24) einen aktuellen Türstatus und/oder durch den Nutzer (15a, 15b) zu initiierende Aktionen umfassen.

6. Steuerungs- und Informationsanlage (1) nach einem der Ansprüche 2 bis 5, **dadurch gekennzeichnet, dass** die Anzeigeeinrichtung (13a, 13b) einen Touchscreen zur manuellen Eingabe der Auslöseaktion (18a, 18b) durch den Nutzer (15a, 15b) und/oder zur individuellen Konfigurierung der Eingabeinformationen (23) und/oder der Ausgabeinformationen (24) auf der Anzeigeeinrichtung (13a, 13b) enthält.

7. Steuerungs- und Informationsanlage (1) nach einem der vorhergehenden Ansprüche, **gekennzeichnet durch** eine Notentriegelungseinrichtung (9) zur An- und Abschaltung der Steuerungseinrichtung (7) und/oder mindestens einer der Mensch-Maschine-Schnittstellen (10,11) und/oder zur manuellen Verriegelung und Entriegelung und/oder zum manuellen Öffnen und Schließen der Türe (4).

8. Steuerungs- und Informationsanlage (1) nach einem der vorhergehenden Ansprüche, **dadurch gekennzeichnet, dass** die Steuerungseinrichtung (7) eine Auswerteeinrichtung (8) umfasst, die zur Auswertung des Auslösesignals (18a, 18b) und/oder zur Ermittlung und Auswertung von Betriebsdaten des Türaktuators (5) und des Schlossaktuators (6) eingerichtet ist.

9. Steuerungs- und Informationsanlage (1) nach Anspruch 8, **dadurch gekennzeichnet, dass** die Betriebsdaten ein Antriebsmoment des Türaktuators (5) und/oder ein zum Betreiben des Türaktuators (5) und/oder des Schlossaktuators (6) aufgewandter Energieverbrauch und/oder Betriebszeiten des Türaktuators (5) und/oder des Schlossaktuators (6) sind, wobei die Auswerteeinrichtung (8) dazu eingerichtet ist, auf Basis der Betriebsdaten einen Betriebszustand der Steuerungs- und Informationsanlage (1) auszuwerten.

10. Steuerungs- und Informationsanlage (1) nach Anspruch 9, **dadurch gekennzeichnet, dass** die Steuereinrichtung (7) dazu eingerichtet ist, den Betriebszustand zur internen Fehlerbehandlung zu nutzen und/oder an die autorisierte Stelle (22) zur Fehler- und/oder Notfallmeldung als die Ausgabeinformation (24) zu übermitteln.

11. Steuerungs- und Informationsanlage (1) nach einem der vorhergehenden Ansprüche, **dadurch gekennzeichnet, dass** der Türaktuator (5) eine Antriebseinheit (33) zur Erzeugung und Übertragung eines Drehmoments auf ein Türscharnier (31) der Türe (4) ist, wobei der Türaktuator (5) einen Positionssensor (25) zur Erfassung einer Türposition und zur Übermittlung der Türposition als Positionssignal (28) an die Steuerungseinrichtung (7) umfasst.

12. Steuerungs- und Informationsanlage (1) nach einem der vorhergehenden Ansprüche, **dadurch gekennzeichnet, dass** der Schlossaktuator (6) eine weitere Antriebseinheit (37) und ein Verriegelungselement (27) umfasst, wobei das Verriegelungselement (27) mittels der weiteren Antriebseinheit (37) von einer Ausgangsposition in eine Verriegelungsposition und zurück überführbar ist, wobei der Schlossaktuator (6) einen weiteren Positionssensor (26) zur Erfassung der Position des Verriegelungselements (27) und zur Übermittlung der Position als weiteres Positionssignal (29) an die Steuerungseinrichtung (7) umfasst.

13. Waschraum (3) zur Integration in ein Flugzeug (2), mit einer Wandstruktur, welche den Waschraum (3) zumindest abschnittsweise umschließt, mit einer Türe (4), welche in der Wandstruktur angeordnet ist und mit einer Steuerungs- und Informationsanlage (1) nach einem der vorhergehenden Ansprüche.

14. Flugzeug (2) mit dem Waschraum (3) nach Anspruch 13.

15. Verfahren zur Ansteuerung einer Türe (4) eines Waschraums (3) eines Flugzeugs (2) und zum Austausch von Informationen über den Waschraum (3) mit Hilfe einer Steuerungs- und Informationsanlage (1) nach einem der Ansprüche 1 bis 12 oder des Waschraums nach Anspruch 13 oder des Flugzeugs nach Anspruch 14, bei dem:
die Steuerungseinrichtung (7) den Türaktuator (5) und den Schlossaktuator (6) auf Basis der durch die Mensch-Maschine-Schnittstelle (10, 11) erfassten Auslöseaktion (18a 18b) des Nutzers (15) dazu ansteuert, die Türe (4) zu öffnen oder zu schließen oder zu verriegeln oder zu entriegeln, und bei dem mittels der mindestens einen Kommunikationsschnittstelle (21) Eingabeinformationen (23) der autorisierten Stelle (22) an die Steuerungseinrichtung (7) und optional auch Ausgabeinformationen (24) der Steuerungseinrichtung (7) an die autorisierte Stelle (22) übermittelt werden.

## Claims

1. Control and information system (1) for a lavatory (3) of an aircraft (2), wherein the lavatory (3) has a door (4),
having a door actuator (5) for opening and closing the door (4),
having a lock actuator (6) for locking and unlocking the door (4),
having a control device (7) for controlling the door actuator (5) and the lock actuator (6),
having at least one human-machine interface (10, 11) for detecting a triggering action (18a, 18b) relating to the door (4) by a user (15) of the door (4) and for transmitting the triggering action (18a, 18b) to the control device (7) as a trigger signal (19a, 19b),
**characterized by**
at least one communication interface (21) for transmitting input information (23) to the control device (7) from an authorized entity (22) different to the user (15), and optionally also for transmitting output information (24) from the control device (7) to the authorized entity (22).

2. Control and information system (1) according to Claim 1, **characterized in that** the human-machine interface (10, 11) comprises a display device (13a, 13b), optionally for outputting the input information (23) and/or the output information (24), and/or at least one of the communication interfaces (21).

3. Control and information system (1) according to Claim 2, **characterized in that** one of the authorized entities (22) is an on-board network (5) of the aircraft (2) and at least one of the communication interfaces (21) is configured for communication with the on-board network (5).

4. Control and information system (1) according to any one of Claims 1 to 3, **characterized in that** the human-machine interface (10, 11) comprises a sensor device (12a, 12b), wherein the sensor device (12a, 12b) comprises at least one optical and/or capacitive proximity sensor for detecting a touchless approach by the user (15) and/or for detecting a touchless gesture (20) of the user (15) as a triggering action (18a, 18b).

5. Control and information system (1) according to any one of Claims 2 to 4, **characterized in that** the display device (13a, 13b) can be controlled on the basis of the trigger signal (18a, 18b) to display the output information (24), wherein the output information (24) comprises a current door status and/or actions to be initiated by the user (15a, 15b).

6. Control and information system (1) according to any one of Claims 2 to 5, **characterized in that** the display device (13a, 13b) contains a touch screen for manually inputting the triggering action (18a, 18b) by the user (15a, 15b) and/or for the individual configuration of the input information (23) and/or the output information (24) on the display device (13a, 13b).

7. Control and information system (1) according to any one of the previous claims, **characterized by** an emergency unlocking device (9) for activating and deactivating the control device (7) and/or at least one of the human-machine interfaces (10, 11) and/or for manually locking and unlocking and/or for manually opening and closing the door (4).

8. Control and information system (1) according to any one of the previous claims, **characterized in that** the control device (7) comprises an evaluation device (8), which is configured to evaluate the trigger signal (18a, 18b) and/or to determine and evaluate operating data of the door actuator (5) and the lock actuator (6).

9. Control and information system (1) according to Claim 8, **characterized in that** the operating data is a drive torque of the door actuator (5) and/or an expended energy consumption and/or operating times of the door actuator (5) and/or of the lock actuator (6) to operate the door actuator (5) and/or the lock actuator (6), wherein the evaluation device (8) is configured to evaluate an operating state of the control and information system (1) on the basis of the operating data.

10. Control and information system (1) according to Claim 9, **characterized in that** the control device (7) is configured to use the operating state for internal error handling and/or to transmit it to the authorized entity (22) as output information (24) for error and/or emergency notification.

11. Control and information system (1) according to any one of the previous claims, **characterized in that** the door actuator (5) is a drive unit (33) used to generate and transmit a torque to a door hinge (31) of the door (4), the door actuator (5) comprising a position sensor (25) for detecting a door position and for transmitting the door position as a position signal (28) to the control device (7).

12. Control and information system (1) according to any one of the previous claims, **characterized in that** the lock actuator (6) comprises an additional drive unit (37) and a locking element (27), wherein the locking element (27) can be transferred from a starting position to a locking position and back by means of the additional drive unit (37), the lock actuator (6) comprising an additional position sensor (26) for detecting the position of the locking element (27) and for transmitting the position as an additional position signal (29) to the control device (7).

13. Lavatory (3) for integration into an aircraft (2), having a wall structure that encloses at least sections of the lavatory (3), having a door (4) arranged in the wall structure and having a control and information system (1) according to any one of the previous claims.

14. Aircraft (2) having the lavatory (3) according to Claim 13.

15. Method for controlling a door (4) of a lavatory (3) of an aircraft (2) and for exchanging information about the lavatory (3) with the aid of a control and information system (1) according to any one of Claims 1 to 12 or the lavatory according to Claim 13 or the aircraft according to Claim 14, in which:
the control device (7) controls the door actuator (5) and the lock actuator (6) on the basis of the triggering action (18a, 18b) of the user (15) detected by the human-machine interface (10, 11) to open or close the door (4) or to lock or unlock it, and in which, by means of the at least one communication interface (21), input information (23) from the authorized entity (22) is transmitted to the control device (7) and, optionally, output information (24) from the control device (7) is also transmitted to the authorized entity (22).

## Revendications

1. Système de commande et d'information (1) pour un local sanitaire (3) d'un aéronef (2), le local sanitaire (3) possédant une porte (4),
comprenant un actionneur de porte (5) destiné à ouvrir et à fermer la porte (4),
comprenant un actionneur de serrure (6) destiné à verrouiller et à déverrouiller la porte (4),
comprenant un dispositif de commande (7) destiné à commander l'actionneur de porte (5) et l'actionneur de serrure (6),
comprenant au moins une interface homme-machine (10, 11) destinée à détecter une action de déclenchement (18a, 18b) concernant la porte (4) d'un utilisateur (15) de la porte (4) et à communiquer l'action de déclenchement (18a, 18b) en tant que signal de déclenchement (19a, 19b) au dispositif de commande (7),
**caractérisé par**
au moins une interface de communication (21) destinée à communiquer au dispositif de commande (7) des informations de saisie (23) d'un poste autorisé (22) différent de l'utilisateur (15) et, en option, à communiquer également des informations de sortie (24) du dispositif de commande (7) au poste autorisé (22).

2. Système de commande et d'information (1) selon la revendication 1, **caractérisé en ce que** l'interface homme-machine (10, 11) comporte un dispositif d'affichage (13a, 13b), en option pour délivrer les informations de saisie (23) et/ou les informations de sortie (24), et/ou au moins l'une des interfaces de communication (21).

3. Système de commande et d'information (1) selon la revendication 2, **caractérisé en ce que** l'un des postes autorisés (22) est un réseau de bord (5) de l'aéronef (2) et au moins l'une des interfaces de communication (21) est conçue pour la communication avec le réseau de bord (5).

4. Système de commande et d'information (1) selon l'une des revendications 1 à 3, **caractérisé en ce que** l'interface homme-machine (10, 11) comporte un dispositif capteur (12a, 12b), le dispositif capteur (12a, 12b) comportant au moins un détecteur de proximité optique et/ou capacitif destiné à détecter une approche sans contact de l'utilisateur (15) et/ou destiné à détecter un geste sans contact (20) de l'utilisateur (15) en tant qu'action de déclenchement (18a, 18b).

5. Système de commande et d'information (1) selon l'une des revendications 2 à 4, **caractérisé en ce que** le dispositif d'affichage (13a, 13b) peut être commandé sur la base du signal de déclenchement (18a, 18b) pour afficher les informations de sortie (24), les informations de sortie (24) comprenant un état actuel de la porte et/ou des actions à initier par l'utilisateur (15a, 15b).

6. Système de commande et d'information (1) selon l'une des revendications 2 à 5, **caractérisé en ce que** le dispositif d'affichage (13a, 13b) contient un écran tactile destiné à la saisie manuelle de l'action de déclenchement (18a, 18b) par l'utilisateur (15a, 15b) et/ou destiné à la configuration individuelle des informations de saisie (23) et/ou des informations de sortie (24) sur le dispositif d'affichage (13a, 13b).

7. Système de commande et d'information (1) selon l'une des revendications précédentes, **caractérisé par** un dispositif de déverrouillage de secours (9) destiné à mettre en et hors circuit le dispositif de commande (7) et/ou au moins l'une des interfaces homme-machine (10, 11) et/ou destiné à verrouiller et à déverrouiller manuellement et/ou à ouvrir et à fermer manuellement la porte (4).

8. Système de commande et d'information (1) selon l'une des revendications précédentes, **caractérisé en ce que** le dispositif de commande (7) comprend un dispositif d'interprétation (8), lequel est conçu pour interpréter le signal de déclenchement (18a, 18b) et/ou pour identifier et interpréter des données de fonctionnement de l'actionneur de porte (5) et de l'actionneur de serrure (6).

9. Système de commande et d'information (1) selon la revendication 8, **caractérisé en ce que** les données de fonctionnement sont un moment d'entraînement de l'actionneur de porte (5) et/ou une consommation d'énergie dépensée pour faire fonctionner l'actionneur de porte (5) et/ou l'actionneur de serrure (6) et/ou des temps de fonctionnement de l'actionneur de porte (5) et/ou de l'actionneur de serrure (6), le dispositif d'interprétation (8) étant conçu pour interpréter un état de fonctionnement du système de commande et d'information (1) sur la base des données de fonctionnement.

10. Système de commande et d'information (1) selon la revendication 9, **caractérisé en ce que** le dispositif de commande (7) est conçu pour utiliser l'état de fonctionnement pour le traitement interne des défauts et/ou le communiquer au poste autorisé (22) en tant qu'information de sortie (24) pour notification de défaut et/ou de situation d'urgence.

11. Système de commande et d'information (1) selon l'une des revendications précédentes, **caractérisé en ce que** l'actionneur de porte (5) est une unité d'entraînement (33) destinée à générer et à transmettre un couple sur une charnière de porte (31) de la porte (4), l'actionneur de porte (5) comportant un capteur de position (25) destiné à détecter une position de porte et à communiquer la position de porte en tant que signal de position (28) au dispositif de commande (7).

12. Système de commande et d'information (1) selon l'une des revendications précédentes, **caractérisé en ce que** l'actionneur de serrure (6) comprend une unité d'entraînement (37) supplémentaire et un élément de verrouillage (27), l'élément de verrouillage (27) pouvant être transféré par l'unité d'entraînement (37) supplémentaire d'une position initiale à une position de verrouillage et inversement, l'actionneur de serrure (6) comprenant un capteur de position (26) supplémentaire destiné à détecter la position de l'élément de verrouillage (27) et à communiquer la position en tant que signal de position (29) supplémentaire au dispositif de commande (7).

13. Local sanitaire (3) destiné à l'intégration dans un aéronef (2), comprenant une structure de paroi qui entoure le local sanitaire (3) au moins dans certaines portions, comprenant une porte (4), qui est disposée dans la structure de paroi, et comprenant un système de commande et d'information (1) selon l'une des revendications précédentes.

14. Aéronef (2) équipé d'un local sanitaire (3) selon la revendication 13.

15. Procédé de commande d'une porte (4) d'un local sanitaire (3) d'un aéronef (2) et d'échange d'informations à propos du local sanitaire (3) à l'aide d'un système de commande et d'information (1) selon l'une des revendications 1 à 12 ou du local sanitaire (3) selon la revendication 13 ou du véhicule selon la revendication 14, avec lequel :
le dispositif de commande (7) commande l'actionneur de porte (5) et l'actionneur de serrure (6) sur la base de l'action de déclenchement (18a, 18b) de l'utilisateur (15) détectée par l'interface homme-machine (10, 11) de manière à ouvrir ou à fermer ou à verrouiller ou à déverrouiller la porte (4), et avec lequel, au moyen de l'au moins une interface de communication (21), des informations de saisie (23) du poste autorisé (22) sont communiquées au dispositif de commande (7) et, en option, également des informations de sortie (24) du dispositif de commande (7) au poste autorisé (22).
